# EUROPEAN PATENT APPLICATION

(11) **EP 4 726 671 A1**
(43) Date of publication of application: **15.04.2026**
(21) Application number: 25203328.7
(22) Date of filing: 19.09.2025
(51) Int. Cl.: G06V 10/764, G06V 10/82, G06V 20/20, G06V 20/52, G06V 40/10

(54) **COMPLIANCE GUARDIAN SYSTEM**

(30) Priority: 11.10.2024 US 202418913121
(71) Applicant: ADP, Inc., Roseland, NJ 07068 (US)
(72) Inventor: Mello, Andres, 90460050 Porto Alegre (BR); Dias, Roberto, 90460050 Porto Alegre (BR); Becker, Willian, 90460050 Porto Alegre (BR)
(74) Representative: Friese Goeden Patentanwälte PartGmbB

(57) **Abstract**

Systems and methods are provided for building personal protection equipment (PPE) rules. A live image may be received from a camera, where the live image is of a human body or a portion of the human body. A machine learning model may identify any body parts in the image for which PPE is usable. An augmented reality image may include the live image and an identifier object superimposed on any identified body parts, enabling a selection of a user-selected body part in the augmented reality image. PPE items usable for the user-selected body part may be added to the set of PPE required for a team. Systems and methods of safety compliance are provided that determine, by a machine learning model, a compliance score from the image, the compliance score indicating a degree to which the person is in compliance with PPE rules.

## Description

### TECHNICAL FIELD

This application relates to safety systems and, in particular, to safety compliance systems.

### BACKGROUND

Present safety systems suffer from a variety of drawbacks, limitations, and disadvantages. Accordingly, there is a need for inventive systems, methods, components, and apparatuses described herein.

### BRIEF DESCRIPTION OF THE DRAWINGS

The examples may be better understood with reference to the following drawings and description. The components in the figures are not necessarily to scale. Moreover, in the figures, like-referenced numerals designate corresponding parts throughout the different views.
FIG. 1 illustrates a flow diagram of logic of an example of a system for building personal protection equipment rules;
FIG. 2 illustrates a flow diagram of the logic of an example of a safety compliance apparatus or system;
FIG. 3 illustrates an example of pseudo code for determining the compliance score;
FIG. 4 illustrates an example of structures of the PPE items and the team PPE list in the database; and
FIG. 5 illustrates an example of a system for building the PPE rules and an example of a safety compliance apparatus.

### DETAILED DESCRIPTION

In one example, a system is provided for building personal protection equipment (PPE) rules. The system may include a camera, a display, and a computing device. The computing device includes a memory and a processor, where the processor is in communication with the camera, the display, and the memory. The memory comprises instructions that, when executed by the processor: receive a live image from the camera, wherein the live image is of a human body or a portion of the human body; identify, by a machine learning model, any body parts in the image for which PPE is usable; generate an augmented reality image for the display, the augmented reality image comprising the live image and an identifier object superimposed on any identified body parts; identify a user-selected body part based on receipt of a selection of the user-selected body part in the augmented reality image; find a set of PPE items that are usable for the user-selected body part from a database; and add a PPE item selected from the set of PPE to a team PPE list.

In another example, a safety compliance apparatus is provided. The apparatus may include: a camera, a display, a user input device, and a computing device. The computing device may include a memory and a processor, where the processor is in communication with the camera, the display, the user input device, and the memory. The memory comprises instructions that, when executed by the processor: receive an image of a person or a portion thereof from the camera; determine, by a machine learning model, a compliance score from the image, the compliance score indicating a degree to which the person is in compliance with a plurality of personal protection equipment rules; indicate that the person complies with the personal protection equipment rules in response to a determination that the compliance score indicates the person is in compliance; and indicate that the person does not comply with the personal protection equipment rules in response to a determination that the compliance score indicates the person is not in compliance.

One technical advantage of the systems and methods for building personal protection equipment (PPE) rules described herein may be to more accurately determine compliance with the PPE rules. The system and methods provide a specific technical solution for building of the PPE rules that enables easy creation and modification of the PPE rules. As a result, this practical application inherently improves the accuracy of safety compliance systems that rely on PPE rules because the PPE rules are more likely to be correct in practice than with some other technical solutions.

One technical advantage of the safety compliance apparatuses and systems described herein may be that they determine compliance with PPE rules more quickly than with some other systems. The specific reliance on a compliance score inferred by a machine learning model, and optionally, handling situations where the compliance score is ambiguous with respect to compliance, provides a practical application that may improve speed and/or accuracy of the apparatuses and systems over some other technical solutions.

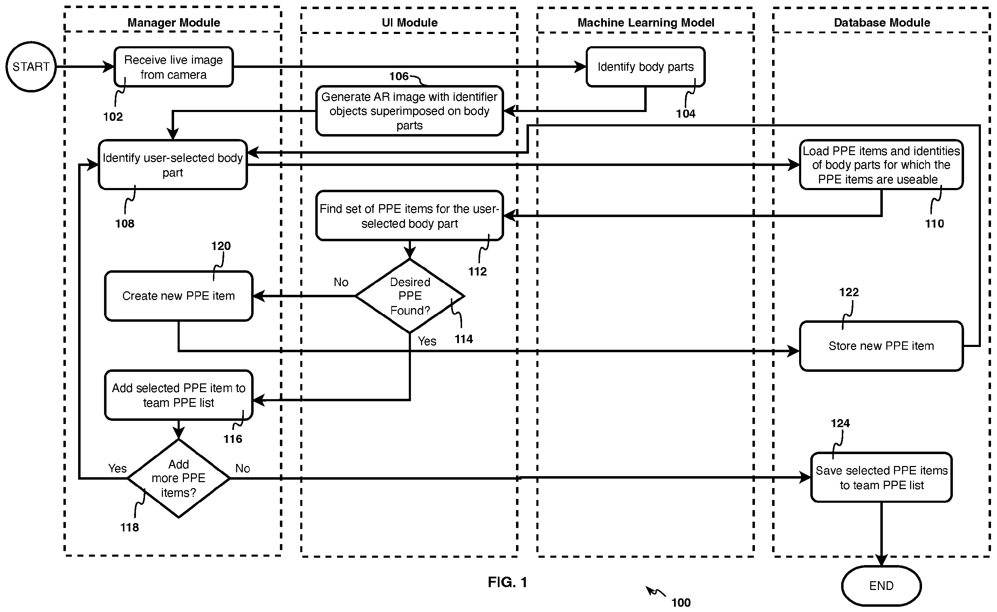

FIG. 1 illustrates a flow diagram of logic 100 of an example of a system for building personal protection equipment (PPE) rules. The logic may include additional, different, or fewer operations than illustrated. The operations may be executed in a different order than illustrated in FIG. 1.

A manager module may receive 102 an image from a camera, where the image is of a human body or a portion of the human body. For example, a manager or another person may direct the camera at the manager's body. In an alternative example, the manager or some other person may stand in front of the camera. The image may be a live image, meaning an image in a series of images that make up a real-time video. Alternatively, the image may be a single image.

An ML model (machine learning model) may identify 104 any body parts in the image that may be fitted with PPE and/or for which PPE are usable. The ML model may be a pre-trained ML model for object recognition, such as Convolutional Neural Network (CNN), Region-Based CNN, Vision Transformers, YOLO (You Only Look Once), SSD (Single Shot MultiBox Detector), or any other machine learning model configured to identify human body parts in an image. The ML model may also return identifier objects for the body parts in the image. Examples of identifier objects may include bounding boxes, circles, rectangles, arrows, and any other object suitable to identify a body part in an image. The identifier objects visually identify corresponding body parts on the image received from the camera.

A UI module (user interface module) may generate 106 an AR image (augmented reality image) for a display. Augmented reality is a technology that superimposes a computer-generated image on a user's view of the real world, thus providing a composite view. In the system for building PPE rules, the AR image may include the image from the camera and identifier objects superimposed on the identified body parts. The AR image may be displayed and updated in real-time as the image is updated in real-time from the camera.

The manager module may identify 108 a user-selected body part based on receipt of a selection of the user-selected body part in the augmented reality image. The selection of the user-selected body part in the augmented reality image may result from, for example, a mouse click on the user-selected body part, from a touch on a touch screen where the user-selected body part is displayed, from a verbal description of the user-selected body part received by a microphone, or from any other type of selection received by a user input device.

A database module may load 110 PPE items and identities of body parts for which the PPE items are usable into memory from a database. The PPE items may include any type of personal protection equipment. Examples of PPE items may include boots, gloves, safety glasses, reflective vests, long-sleeve shirts, hardhats, ear protection devices, and any other device or piece of clothing that may provide protection to its wearer or others. A body part mapping stored in the database may provide the identities of body parts for which the PPE items are usable. For example, gloves may be for hands, and boots for feet.

The UI module may find 112 a set of PPE items that are usable for the user-selected body part from the database. For example, if a head was the user-selected body part, then the UI module may find the set of PPE items usable for the head from the PPE items and identities of body parts for which the PPE items are usable. In one such example, the set of PPE items may include various types of hardhats and safety glasses.

The UI module may cause the set of PPE items that are usable for the user-selected body part to be displayed. The manager module may receive 114 a selection of one or more of the PPE items as PPE desired to be included in a team PPE list. The team PPE list may be a list of PPE required for individual(s) on a team, individual(s) located in an operational area, individual(s) who may operate a predetermined device or machine, and/or more generally, individual(s) who belong to a group subject to a common set of PPE rules.

If a selection of one or more of the PPE items is received 114 as PPE to be included in the team PPE list, then the manager module may add 116 the PPE item to the team PPE list. If more PPE items are to be added 118 for inclusion in the team PPE list, then operations may return to the manager module, enabling receipt of a selection of a user-selected body part in the augmented reality image to identify 108 the user-selected body part for which PPE items are usable.

In some examples, if the set of PPE items found for the user-selected body part does not include a desired PPE item, then the manager module may easily create 120 a new PPE item based on the image and/or the augmented reality image. For example, the manager module may identify a user-selected body part in a manner described above, and the camera may be then directed to the new PPE item. As a result, the image received from the camera may be of the new PPE item. The database module may store 122 the image of the new PPE item for the user-selected body part in the database. Operations may, for example, return to the manager module, enabling receipt of a selection of a user-selected body part in the augmented reality image to identify 108 the user-selected body part for which PPE items are usable.

If no more PPE items are to be added to the team PPE list, then operations may end by, for example, the database module saving 124 the team PPE list to the database. The team PPE list may represent the PPE rules by being a list of PPE items required and/or desired by the team corresponding to the team PPE list.

The system for building PPE rules may include features for people with disabilities. A person, such as a manager, using the system may have visual impairments.

Once the visually impaired person accesses the system, the person may verbally describe the PPEs required for people on the team to be compliant. A speech-to-text machine learning model may convert audio received through a microphone to a requested set of PPE items. The manager module may confirm the requested set of PPE items are found in the PPE items stored in the database. If found, the database module may add the requested set of PPE items to the team PPE list.

Alternatively or in addition, a text-to-speech machine learning model may convert the requested set of PPE items to audio that may be played through a speaker. The visually impaired person may confirm the requested set of PPE items is correct by speaking. The speech-to-text machine learning model may verify that the visually impaired person confirmed the set is correct before the database module adds the requested set of PPE items to the team PPE list. For example, the speech-to-text machine learning model may convert a confirmation message to a confirmation indication, such as yes or no. If the confirmation indication indicates the set is correct, then the database module adds the requested set of PPE items to the team PPE list.

In some examples, the database may be pre-populated with default PPE items for multiple types of teams. The manager module may first initialize the set of PPE items for the team to the default PPE items for the team type. The UI module may cause the initialized set of PPE items for the team to be displayed, and receive user-feedback to modify the set of PPE items for the team as desired by the person using the system.

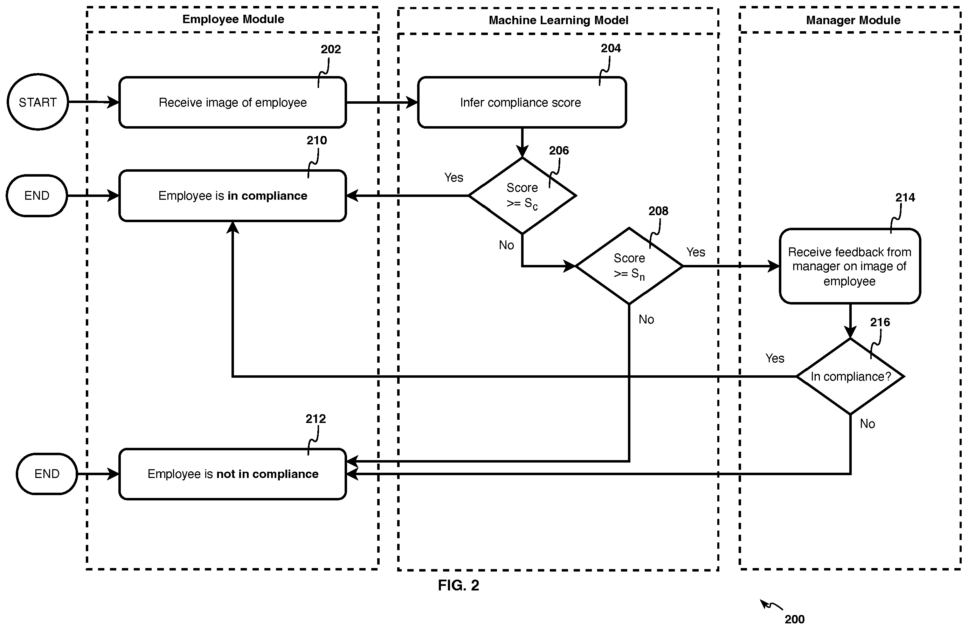

FIG. 2 illustrates a flow diagram of the logic 200 of an example of a safety compliance apparatus or safety compliance system. The safety compliance apparatus may be used to determine if a person complies with, for example, the PPE rules built with the system described above. As noted above, the team PPE list, for example, may represent the PPE rules. The logic may include additional, different, or fewer operations than illustrated. The operations may be executed in a different order than illustrated in FIG. 2.

An employee module may receive 202 an image of a person or a portion thereof from a camera. For example, an employee or any other person may position the camera so the image is of the person who is holding the camera.

The ML model may determine 204 (for example, infer) a compliance score from the image, the compliance score indicating a degree to which the person is in compliance with the PPE rules. In some examples, the ML model may be fine-tuned with a predefined set of PPE images so that the ML model may be more likely to identify the PPE during inference time. The predefined set of PPE images may be, for example, PPE used at a company. The compliance score may be the ML model result after inferring the image. The ML model may use Cosine Distance, Euclidian Distance, or any other distance (or similarity) to determine when two images are likely to include the same object.

The compliance score may be a value determined on, for example, a zero to one scale, where 0 is entirely non-compliant, and 1 is entirely compliant. It is understood that any other scale may be used. For example, the scale may be one to ten, where one is entirely compliant, and ten is entirely non-compliant.

The ML model or the employee module may decide 206 if the compliance score indicates the person is in compliance. For example, the compliance score may indicate the person is in compliance if the compliance score exceeds a compliance threshold, such as 0.9.

The ML model or the employee module may decide 208 if the compliance score indicates the person is not in compliance. For example, the compliance score may indicate the person is not in compliance if the compliance score is less than a non-compliance threshold, such as 0.6.

In response to a determination that the compliance score indicates the person is in compliance, the employee module may indicate 210 that the person complies with the PPE rules. For example, the employee module may cause an indication that the person is in compliance to be displayed on a display, audio to be played indicating the person is in compliance, and/or a light to turn green indicating the person is in compliance.

In response to a determination that the compliance score indicates the person is not in compliance, the employee module may indicate 212 that the person does not comply with the PPE rules. For example, the employee module may cause an indication that the person is not in compliance to be displayed on a display, audio to be played indicating the person is not in compliance, and/or a light to turn red indicating the person is not in compliance.

The ML model or the employee module may decide 206 and 208 that the compliance score is ambiguous as to whether the person is in compliance. For example, the compliance score may be ambiguous as to whether the person is in compliance or not if the compliance score is between the compliance threshold and the non-compliance threshold.

In response to a determination that the compliance score is ambiguous as to whether the person is in compliance, the manager module may receive 214 feedback in the form of a user-specified compliance indication from a user input device. For example, the UI module may cause the image received 202 by the employee module to be displayed for another user, such as for a manager of the person in the image. The manager module may receive 214 the user-specified compliance indication in the form of, for example, an indication that a compliant button or a non-compliant button was pressed by the manager. The manager module may determine 216 if the person is in compliance based on the user-specified compliance indication.

In response, the employee module may indicate 210 or 212 whether the person complies with the PPE rules according to the user-specified compliance indication. For example, if the compliant button was pressed, then the employee module may indicate 210 that the person complies with the PPE rules. Alternatively, if the non-compliant button was pressed, then the employee module may indicate 212 that the person does not comply with the PPE rules.

In some examples, the ML model is configured to identify missing PPE items. The missing PPE items are those PPE items that the PPE rules indicate are required but are not present in image. Alternatively or in addition, in some examples, the machine learning model is configured to identify non-compliant PPE items. Non-compliant PPE items are those PPE items detected in the image that do not satisfy the PPE rules.

In some examples, the feedback of the user-specified compliance indication may be stored in the database. This feedback may be referred to as "manager feedback" even though a person other than a manager may be providing the feedback. The manager feedback in the database may be used later for ML model re-training or to otherwise influence future inferences made by the ML model.

Additional feedback may be received and stored in the database for ML model re-training or for otherwise influencing future inferences made by the ML model. For example, after the employee module indicates 210 or 212 whether the employee is in compliance, the employee module may receive employee feedback on the determination of compliance. For example, the employee module may receive an indication of whether a thumbs up button or a thumbs down button was pressed by the employee in response to the decision according to the user-specified compliance indication and/or the ML model. This is referred to as "employee feedback," even though the feedback may be received from a person other than an employee.

In some examples, the safety compliance apparatus or safety compliance system may enable addition of a previously non-compliant PPE item to the team PPE list of compliant PPE items based on the employee feedback and/or the manager feedback. For example, before receiving 214 the user-specified compliance indication, the manager module may cause the incorrect PPE items to be displayed. The manager module may accept a selection of any of the incorrect PPE items for inclusion in the team PPE list of compliant PPE items. In response to the selection, the manager module may add previously non-compliant PPE item to the team PPE list.

The ML model, manager module, or other module may monitor the amount or percentages of the images getting compliance scores indicating non-compliance versus indicating compliance. If a relatively high percentage of the images are indicated as being in compliance, it may suggest that the safety compliance apparatus or safety compliance system is working well and the people in the images are using the proper PPE.

The safety compliance apparatus or safety compliance system may include features for people with disabilities. A person, such as a manager or an employee, using the system may have visual impairments.

For example, an employee may use a computer or a mobile phone to take a picture of himself or herself. The image received 202 by the employee module may be the picture of the employee. The ML model determines 204 the compliance score and identifies missing and/or incorrect PPE items, as explained above. The database may include text descriptions and/or audio data for the PPE. Accordingly, the database module may retrieve the text descriptions and audio data for the missing and/or the incorrect PPE items. The employee module may play an audio message via a speaker to indicate 210 or 212 whether the employee complies with the PPE rules. If the employee is not in compliance, then the employee module may cause the audio data identifying the missing and/or the incorrect PPE items to be played via the speaker. The employee module may receive the employee feedback on the determination of compliance in the form of speech via a microphone. The speech-to-text machine learning model may convert the speech to text for processing.

As another example, a visually impaired manager, or any other person who is handling the case where the compliance score is ambiguous with respect to compliance, may use the safety compliance apparatus and/or the safety compliance system. The manager module may cause the compliance score to be played via the speaker to the manager. Alternatively or in addition, the manager module may cause the audio data identifying the missing and/or the incorrect PPE items to be played via the speaker to the manager. Next, in order to receive 214 the user-specified compliance indication, the manager may verbally indicate whether the person in the image is compliant. The speech-to-text module may convert the manager's speech to text to obtain the user-specified compliance indication.

The algorithms of various modules, such as the manager module, the employee module, the UI module, and the database module, are described above and in the figures. However, it is understood that one or more of the described algorithms may be performed by different, additional, or fewer modules.

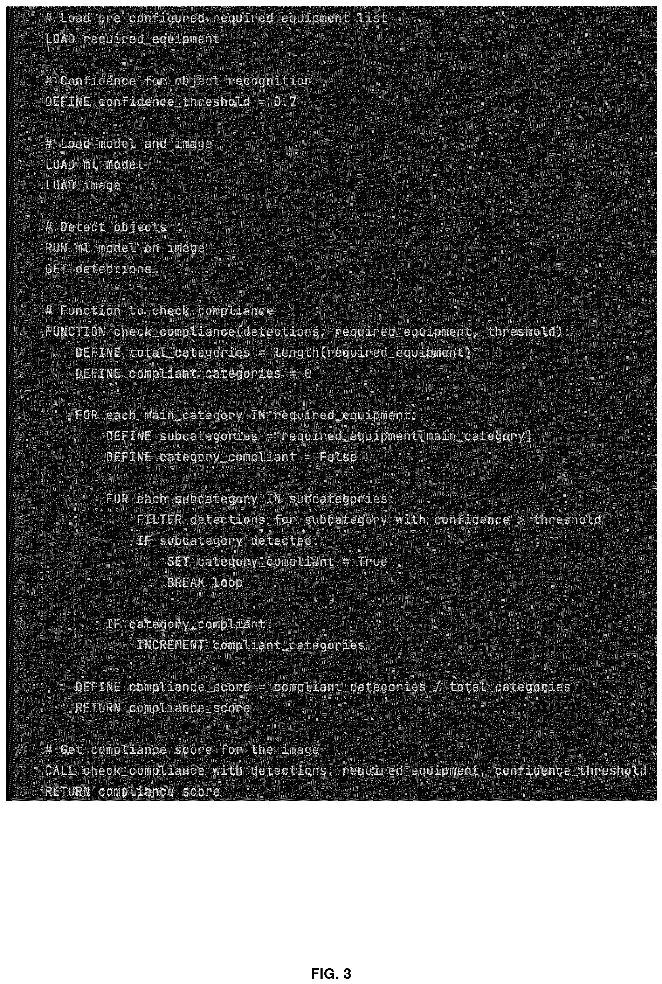

FIG. 3 illustrates an example of pseudo code for determining the compliance score. Any other suitable code structures and/or algorithms for determining the compliance score may be used.

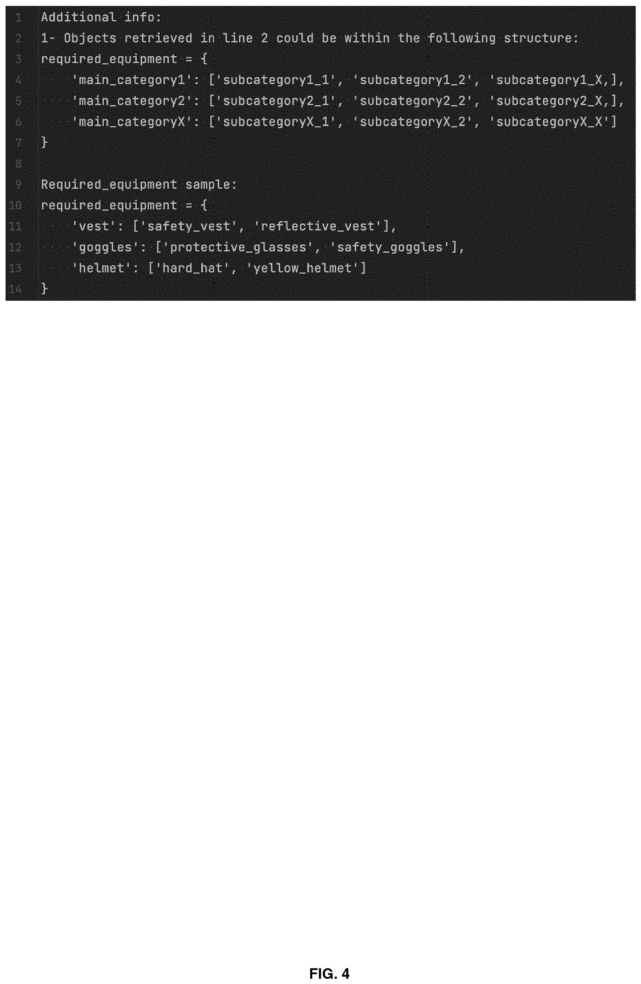

FIG. 4 illustrates an example of structures of the PPE items and the team PPE list in the database. These structures are in a JSON format. Any other suitable structures and formats may be used.

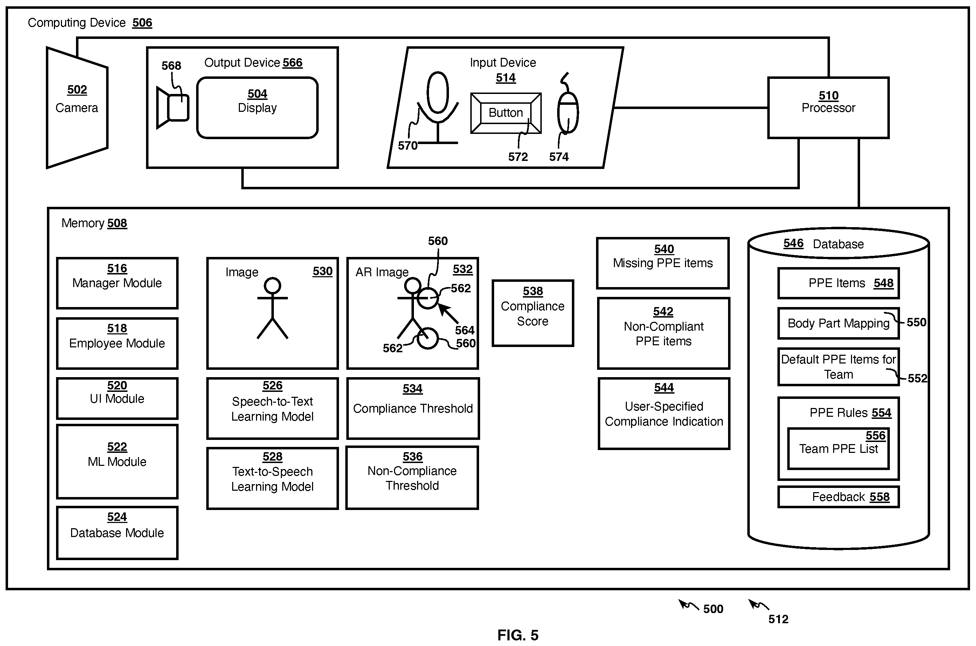

FIG. 5 illustrates an example of a system 500 for building the PPE rules. The system 500 may include a camera 502, a display 504, and a computing device 506. The computing device 506 includes a memory 508 and a processor 510. In some examples, such as the one illustrated in FIG. 5, the camera 502 and the display 504, are integral to the computing device 506. The processor 510 is in communication with the camera 502, the display 504, and the memory 508.

The computing device 506 may be any device that perform calculations using a processor, such as the processor 510, that executes instructions. Examples of the computing device 506 may include a mobile device, a smart phone, a tablet computer, a desktop computer, a rack-mounted computer, a server computer, a smart camera, an edge computing device, and an Internet of Things (IoT) device.

FIG. 5 also illustrates an example of a safety compliance apparatus 512. The safety compliance apparatus 512 is also a safety compliance system. The safety compliance apparatus 512 and/or the safety compliance system includes the camera 502, the display 504, a user input device 514, and the computing device 506. In the example shown in FIG. 5, the system 500 for building the PPE rules and the safety compliance apparatus 512 (or the safety compliance system) are integrated into one system.

In the example of the combined systems shown in FIG. 5, the memory 508 includes multiple modules. The modules include a manager module 516, an employee module 518, a UI module 520, an ML model 522, a database module 524, a speech-to-text learning model 526, and a text-to-speech learning model 528. The memory 508 also includes images, such as an image 530 received from the camera 502 and an AR image 532 generated by the UI module 520. The memory 508 also includes data structures and values, such as a compliance threshold 534, a non-compliance threshold 536, a compliance score 538, missing PPE items 540, non-compliant PPE items 542, and a user-specified compliance indication 544.

The AR image 532 includes identifier objects 560 superimposed on identified body parts 562. A user-selected body part 564 shown in FIG. 5 is a hand.

In the example shown in FIG. 5, the memory 508 of computing device 506 includes a database 546. In other examples, the database 546 may be in a device external to the computing device 506. The device external to the computing device 506 may be in communication with the computing device 506 over a network (not shown).

In the example shown in FIG. 5, the database 546 includes PPE items 548, body part mapping 550, default PPE items 552 for a team, PPE rules 554, and feedback 558, such as employee feedback and/or manager feedback. The PPE rules 554 may include one more team PPE lists 556.

As noted above, in the example illustrated in FIG. 5, the system 500 for building the PPE rules and the safety compliance system are integrated into one system. However, in other examples, the systems may be entirely separate from each other or share only one or more components, such as the database 546.

The memory 508 may be any device for storing and retrieving data or any combination thereof. The memory 508 may include non-volatile and/or volatile memory, such as a random access memory (RAM or DRAM), solid state memory, flash memory, a read-only memory (ROM), an erasable programmable read-only memory (EPROM), and/or flash memory. Alternatively or in addition, the memory 508 may include an optical, magnetic (hard-drive), or any other form of data storage device.

The processor 510 may be any device that performs logic operations. The processor 510 may be in communication with the memory 508. The processor 510 may also be in communication with additional components. Examples of the additional components may include an output device 566, such as the display 504 or a speaker 568, the user input device 514, such as a microphone 570, a keyboard 572, a mouse 574, and/or a network (not shown). The processor 510 may include a general processor, a central processing unit, a graphics processing unit, a server device, an application specific integrated circuit (ASIC), a digital signal processor, a field programmable gate array (FPGA), a digital circuit, an analog circuit, a controller, a microcontroller, any other type of processor, or any combination thereof. The processor 510 may include one or more elements operable to execute computer executable instructions or computer code embodied in the memory 508 or in other memory to perform functions described herein.

A machine learning model, such as the ML model 522, the speech-to-text learning model 526, and the text-to-speech learning model 528 is or includes a machine learning model. A machine learning model may be a statistical model that is pre-trained or trainable on training data to recognize a pattern from input data and/or make a decision based on the input data without human intervention. The machine learning model may be trained using supervised learning, unsupervised learning, reinforcement learning, or any other type of machine learning. Once trained, the machine learning model may apply one or more algorithms to relevant input data to achieve a task or output for which the machine learning model was trained.

Unless specified otherwise above, the machine learning model may be any type of suitable model. Examples of the machine learning model type may include a generative model, a discriminative model, a diffusion model, a variational autoencoder, a transformer model, a large language model (LLM), a foundation model, a deep learning model, and a combination of model types.

The ML model 522 may include one or more of the following: Convolutional Neural Networks (CNNs), Deep Learning-Based Object Detection Algorithms, Transfer Learning, Recurrent Neural Networks (RNNs), Long Short-Term Memory (LSTM) Networks, Generative Adversarial Networks (GANs), Anomaly Detection Algorithms, and Image Segmentation Algorithms.

Convolutional Neural Networks (CNNs) are particularly effective for image processing and recognition tasks due to their ability to capture spatial hierarchies in images. CNNs may be trained to recognize various clothing items and PPE by analyzing the patterns and features specific to different attire.

Example of Deep Learning-Based Object Detection Algorithms may include YOLO (You Only Look Once) and SSD (Single Shot MultiBox Detector). YOLO is well-suited for real-time object detection, making it ideal for identifying specific pieces of clothing or PPE in images quickly. SSD, like YOLO, is efficient for real-time detection tasks, with an emphasis on speed and efficiency in detecting objects within images.

Transfer Learning involves using a pre-trained model on a large dataset and then fine-tuning it for specific tasks, such as recognizing types of clothing or safety equipment. Transfer learning may significantly reduce the time and data required to train effective models for the safety compliance apparatus 512.

Recurrent Neural Networks (RNNs) and Long Short-Term Memory (LSTM) Networks are primarily known for their applications in sequence prediction problems. However, they may be used to analyze sequences of images over time to detect changes in compliance, such as the removal of PPE during work hours.

Generative Adversarial Networks (GANs) may be used for data augmentation, generating synthetic images of employees in various attires or PPE to enhance the training dataset, especially in scenarios where data is scarce.

Anomaly Detection Algorithms such as Autoencoders and Isolation Forests may be employed to identify unusual patterns or anomalies in employee attire that deviate from the norm, flagging these instances for further review.

Image Segmentation Algorithms may be beneficial. For example, techniques like Semantic Segmentation and Instance Segmentation may be utilized to distinguish between different items within an image, aiding in the precise identification and classification of PPE and clothing against complex backgrounds.

The display 504 may be any electro-optical device for displaying data. Examples of the display 504 may include a liquid crystal display (LCD), an organic light-emitting diode (OLED), a cathode ray tube (CRT), an electro-luminescent display, a plasma display panel (PDP), a vacuum florescent display (VFD), a touch screen or any other type of display device.

The user input device 514 may be any electro-mechanical device, electro-optical device, or any other type of device that is configured to convert user inputs into electrical signals such as the mouse 574, joystick, trackball, camera, the keyboard 572, keypad, wireless device, the microphone 570 for voice commands, scroll wheel, button, or touch-screen display.

The database 546 may include a memory or a portion thereof, such as a portion of the memory 508 included in the computing device 506, with any electronic collection of information stored therein. The information may be organized so that the information may be accessed, managed, and updated. Examples of the database 546 include but are not limited to a Relational Database Management System (RDBMS), an object-oriented database, an extensible markup language (XML) database, a file system, memory structures, or other organization and storage mechanism. The database may use any type of memory and structure, such as a random access memory (RAM), a read-only memory (ROM), an erasable programmable read-only memory (EPROM), flash memory, optical memory, magnetic (hard-drive or tape) memory or other memory device.

The network may be any collection of transmission links over which data between computing nodes may be exchanged. For example, the network may include a local area network (LAN), a wired network, a wireless network, a wireless local area network (WLAN), a WI-FI^{®} network (WI-FI is a registered trademark of Wireless Ethernet Compatibility Alliance, Inc. of Austin, Texas), a personal area network (PAN), a wide area network (WAN), the Internet, an Internet Protocol (IP) network, any other communications network, or any combination thereof.

A user interface, such as a graphical user interface (GUI), may be any type of user interface which facilitates human interaction with electronic devices, such as computers, hand-held devices (MP3 Players, Portable Media Players, Gaming devices), household appliances and office equipment. The GUI may offer graphical icons, and visual indicators as opposed to text-based interfaces, typed command labels or text navigation to fully represent the information and actions available to a user. The actions may be performed through direct manipulation of the graphical elements. More generally, a user interface is software, hardware, or a combination thereof through which people interact with a machine, device, computer program or any combination thereof.

The system 500 for building the PPE rules and the safety compliance apparatus 512 (or the safety compliance system) may include more, fewer, or different elements than shown in FIG. 5. For example, the system 500 for building the PPE rules may include only the manager module 516, the UI module 520, the ML model 522, and the database module 524. As another example, the safety compliance apparatus 512 may include only the camera 502 and computing device 506, where the memory 508 of the computing device 506 includes only the employee module 518, the ML model 522, and the manager module 516.

The system 500 and the apparatus 512 may be implemented with additional, different, or fewer components. Each component may include additional, different, or fewer components.

The system 500 and the apparatus 512 may be implemented in many different ways. Each module may be hardware or a combination of hardware and software. For example, each module may include an application specific integrated circuit (ASIC), a Field Programmable Gate Array (FPGA), a circuit, a digital logic circuit, an analog circuit, a combination of discrete circuits, gates, or any other type of hardware or combination thereof. Alternatively or in addition, each module may include memory hardware, such as a portion of the memory 508, for example, that comprises instructions executable with the processor 510 or other processor to implement one or more of the features of the module. When any one of the modules includes the portion of the memory that comprises instructions executable with the processor, the module may or may not include the processor. In some examples, each module may just be the portion of the memory 508 or other physical memory that comprises instructions executable with the processor 510 or other processor to implement the features of the corresponding module without the module including any other hardware. Because each module includes at least some hardware even when the included hardware comprises software, each module may be interchangeably referred to as a hardware module.

Some features are shown stored in a computer readable storage medium (for example, as logic implemented as computer executable instructions or as data structures in memory). All or part of the system and/or the apparatus and its logic and data structures may be stored on, distributed across, or read from one or more types of computer readable storage media. Examples of the computer readable storage medium may include a hard disk, a floppy disk, a CD-ROM, a flash drive, a cache, volatile memory, non-volatile memory, RAM, flash memory, or any other type of computer readable storage medium or storage media. The computer readable storage medium may include any type of non-transitory computer readable medium, such as a CD-ROM, a volatile memory, a non-volatile memory, ROM, RAM, or any other suitable storage device. However, the computer readable storage medium is not a transitory transmission medium for propagating signals.

The processing capability of the system 500 and the apparatus 512 may be distributed among multiple entities, such as among multiple processors and memories, optionally including multiple distributed processing systems. Parameters, databases, and other data structures may be separately stored and managed, may be incorporated into a single memory or database, may be logically and physically organized in many different ways, and may implemented with different types of data structures such as linked lists, hash tables, or implicit storage mechanisms. Logic, such as programs or circuitry, may be combined or split among multiple programs, distributed across several memories and processors, and may be implemented in a library, such as a shared library.

The respective logic, software or instructions for implementing the processes, methods and/or techniques discussed above may be provided on computer readable storage media. The functions, acts or tasks illustrated in the figures or described herein may be executed in response to one or more sets of logic or instructions stored in or on computer readable media. The functions, acts or tasks are independent of the particular type of instructions set, storage media, processor or processing strategy and may be performed by software, hardware, integrated circuits, firmware, micro code and the like, operating alone or in combination. Likewise, processing strategies may include multiprocessing, multitasking, parallel processing and the like. In one example, the instructions are stored on a removable media device for reading by local or remote systems. In other examples, the logic or instructions are stored in a remote location for transfer through a computer network or over telephone lines. In yet other examples, the logic or instructions are stored within a given computer, central processing unit ("CPU"), graphics processing unit ("GPU"), or system.

A second action may be said to be "in response to" a first action independent of whether the second action results directly or indirectly from the first action. The second action may occur at a substantially later time than the first action and still be in response to the first action. Similarly, the second action may be said to be in response to the first action even if intervening actions take place between the first action and the second action, and even if one or more of the intervening actions directly cause the second action to be performed. For example, a second action may be in response to a first action if the first action includes setting a Boolean variable to true and the second action is initiated if the Boolean variable is true.

To clarify the use of and to hereby provide notice to the public, the phrases "at least one of <A>, <B>, ... and <N>" or "at least one of <A>, <B>, ... or <N>" or "at least one of <A>, <B>, ... <N>, or combinations thereof" or "<A>, <B>, ... and/or <N>" are defined by the Applicant in the broadest sense, superseding any other implied definitions hereinbefore or hereinafter unless expressly asserted by the Applicant to the contrary, to mean one or more elements selected from the group comprising A, B, ... and N. In other words, the phrases mean any combination of one or more of the elements A, B, ... or N including any one element alone or the one element in combination with one or more of the other elements which may also include, in combination, additional elements not listed. Unless otherwise indicated or the context suggests otherwise, as used herein, "a" or "an" means "at least one" or "one or more."

While various examples have been described, it will be apparent to those of ordinary skill in the art that many more examples and implementations are possible. Accordingly, the examples and implementations described herein are descriptive, but not the only possible examples and implementations.

The subject-matter of the disclosure may also relate, among others, to the following aspects:

A first aspect relates to a safety compliance apparatus, the apparatus comprising: a camera, a display, a user input device, and a computing device, the computing device including a memory and a processor, wherein the processor is in communication with the camera, the display, the user input device, and the memory, wherein the memory comprises instructions that, when executed by the processor: receive an image of a person or a portion thereof from the camera; determine, by a machine learning model, a compliance score from the image, the compliance score indicating a degree to which the person is in compliance with a plurality of personal protection equipment rules; indicate that the person complies with the personal protection equipment rules in response to a determination that the compliance score indicates the person is in compliance; and indicate that the person does not comply with the personal protection equipment rules in response to a determination that the compliance score indicates the person is not in compliance.

A second aspect relates to the safety compliance apparatus of aspect 1, wherein the compliance score indicates the person is in compliance if the compliance score exceeds a compliance threshold.

A third aspect relates to the safety compliance apparatus of any preceding aspect, wherein the compliance score indicates the person is not in compliance if the compliance score is below a non-compliance threshold.

A fourth aspect relates to the safety compliance apparatus of any preceding aspect, wherein the memory comprises instructions that, when executed by the processor: receive a user-specified compliance indication from the user input device in response to a determination that the compliance score is ambiguous as to whether the person is in compliance; and indicate whether the person complies with the personal protection equipment rules according to the user-specified compliance indication.

A fifth aspect relates to the safety compliance apparatus of any preceding aspect, wherein the compliance score is ambiguous as to whether the person is in compliance if the compliance score is between a compliance threshold and a non-compliance threshold.

A sixth aspect relates to the safety compliance apparatus of any preceding aspect, wherein the machine learning model is configured to identify one or more missing PPE items.

A seventh aspect relates to the safety compliance apparatus of any preceding aspect, wherein the machine learning model is configured to identify a non-compliant PPE item.

An eight aspect relates to a non-transitory computer readable storage medium comprising computer executable instructions, the computer executable instructions executable by a processor to: receive an image of a person; determine, by a machine learning model, a compliance score from the image, the compliance score indicating a degree to which the person is in compliance with a plurality of personal protection equipment rules; indicate that the person complies with the personal protection equipment rules in response to a determination that the compliance score indicates the person is in compliance; indicate that the person does not comply with the personal protection equipment rules in response to a determination that the compliance score indicates the person is not in compliance; and indicate whether the person complies with the personal protection equipment rules according to a user-specified compliance indication in response to the determination that the compliance score is ambiguous as to whether the person is in compliance.

A ninth aspect relates to the computer readable storage medium of aspect 8, wherein the computer executable instructions are executable by the processor to play an audio message via a speaker to indicate that the person complies with the personal protection equipment rules.

A tenth aspect relates to the computer readable storage medium of any preceding aspect, wherein the computer executable instructions are executable by the processor to play an audio message via a speaker to indicate that the person does not complies with the personal protection equipment rules.

An eleventh aspect relates to the computer readable storage medium of any preceding aspect, wherein the audio message identifies any missing PPE items and/or any non-compliant PPE items.

A twelfth aspect relates to the computer readable storage medium of any preceding aspect, wherein the computer executable instructions are executable by the processor to: receive a feedback on a determination of compliance with the personal protection equipment rules from a user input device; and re-train the machine learning model based on the feedback.

A thirteenth aspect relates to the computer readable storage medium of aspect 12, wherein the computer executable instructions are executable by the processor to enable addition of a previously non-compliant PPE item to a team PPE list of compliant PPE items based on the feedback.

A fourteenth aspect relates to the computer readable storage medium of any preceding aspect, wherein the computer executable instructions are executable by the processor to convert speech to text to obtain the user-specified compliance indication.

A fifteenth aspect relates to a system for building personal protection equipment (PPE) rules, the system comprising: a camera, a display, and a computing device, the computing device including a memory and a processor, wherein the processor is in communication with the camera, the display, and the memory, wherein the memory comprises instructions that, when executed by the processor: receive a live image from the camera, wherein the live image is of a human body or a portion of the human body; identify, by a machine learning model, any body parts in the image for which PPE is usable; generate an augmented reality image for the display, the augmented reality image comprising the live image and an identifier object superimposed on any identified body parts; identify a user-selected body part based on receipt of a selection of the user-selected body part in the augmented reality image; find a set of PPE items that are usable for the user-selected body part from a database; and add a PPE item selected from the set of PPE to a team PPE list.

A sixteenth aspect relates to the system for building PPE of aspect 15, wherein the memory comprises instructions that, when executed by the processor, create new PPE based on the live image and/or the augmented reality image.

A seventeenth aspect relates to the system for building PPE of any previous aspect, wherein the memory comprises instructions that, when executed by the processor, convert audio, by a speech-to-text machine learning model, to a requested set of PPE items, confirm the requested set of PPE items are found in the PPE items stored in the database, and add the requested set of PPE items to the team PPE list.

An eighteenth aspect relates to the system for building PPE of aspect 17, wherein the memory comprises instructions that, when executed by the processor, convert the requested set of PPE items, by a text-to-speech machine learning model, to audio.

A nineteenth aspect relates to the system for building PPE of aspect 17, wherein the memory comprises instructions that, when executed by the processor, convert a confirmation message, by the speech-to-text machine learning model, to a confirmation indication, and add the add the requested set of PPE items to the team PPE list in response to the confirmation indication indicating the requested set of PPE items are to be added.

A twentieth aspect relates to the system of any previous aspect, wherein the memory comprises instructions that, when executed by the processor, initialize the set of PPE items to default PPE items for a type of team.

In addition to the features mentioned in each of the independent aspects enumerated above, some examples may show, alone or in combination, the optional features mentioned in the dependent aspects and/or as disclosed in the description above and shown in the figures.

Accordingly, the subject-matter of the disclosure may also relate, among others, to systems and methods for building personal protection equipment (PPE) rules. A live image may be received from a camera, where the live image is of a human body or a portion of the human body. A machine learning model may identify any body parts in the image for which PPE is usable. An augmented reality image may include the live image and an identifier object superimposed on any identified body parts, enabling a selection of a user-selected body part in the augmented reality image. PPE items usable for the user-selected body part may be added to the set of PPE required for a team. Systems and methods of safety compliance are provided that determine, by a machine learning model, a compliance score from the image, the compliance score indicating a degree to which the person is in compliance with PPE rules.

## Claims

1. Safety compliance apparatus, the apparatus comprising:
a camera, a display, a user input device, and a computing device, the computing device including a memory and a processor, wherein the processor is in communication with the camera, the display, the user input device, and the memory, wherein the memory comprises instructions that, when executed by the processor:
receive an image of a person or a portion thereof from the camera;
determine, by a machine learning model, a compliance score from the image, the compliance score indicating a degree to which the person is in compliance with a plurality of personal protection equipment rules;
indicate that the person complies with the personal protection equipment rules in response to a determination that the compliance score indicates the person is in compliance; and
indicate that the person does not comply with the personal protection equipment rules in response to a determination that the compliance score indicates the person is not in compliance.

2. Safety compliance apparatus according to claim 1, wherein the compliance score indicates the person is in compliance if the compliance score exceeds a compliance threshold, and/or wherein the compliance score indicates the person is not in compliance if the compliance score is below a non-compliance threshold.

3. Safety compliance apparatus according to any of the preceding claims, wherein the memory comprises instructions that, when executed by the processor:
receive a user-specified compliance indication from the user input device in response to a determination that the compliance score is ambiguous as to whether the person is in compliance; and
indicate whether the person complies with the personal protection equipment rules according to the user-specified compliance indication.

4. Safety compliance apparatus according to any of the preceding claims, wherein the compliance score is ambiguous as to whether the person is in compliance if the compliance score is between a compliance threshold and a non-compliance threshold.

5. Safety compliance apparatus according to any of the preceding claims, wherein the machine learning model is configured to identify one or more missing personal protection equipment items, and/or wherein the machine learning model is configured to identify a non-compliant personal protection equipment item.

6. Non-transitory computer readable storage medium comprising computer executable instructions, the computer executable instructions executable by a processor to:
receive an image of a person;
determine, by a machine learning model, a compliance score from the image, the compliance score indicating a degree to which the person is in compliance with a plurality of personal protection equipment rules;
indicate that the person complies with the personal protection equipment rules in response to a determination that the compliance score indicates the person is in compliance;
indicate that the person does not comply with the personal protection equipment rules in response to a determination that the compliance score indicates the person is not in compliance; and
indicate whether the person complies with the personal protection equipment rules according to a user-specified compliance indication in response to the determination that the compliance score is ambiguous as to whether the person is in compliance.

7. Computer readable storage medium according to claim 6, wherein the computer executable instructions are executable by the processor to play an audio message via a speaker to indicate that the person complies with the personal protection equipment rules, and/or wherein the computer executable instructions are executable by the processor to play an audio message via a speaker to indicate that the person does not complies with the personal protection equipment rules.

8. Computer readable storage medium according to any of claims 6 to 7, wherein the audio message identifies any missing personal protection equipment items and/or any non-compliant personal protection equipment items.

9. Computer readable storage medium according to any of claims 6 to 8, wherein the computer executable instructions are executable by the processor to:
receive a feedback on a determination of compliance with the personal protection equipment rules from a user input device; and
re-train the machine learning model based on the feedback.

10. Computer readable storage medium according to claim 9, wherein the computer executable instructions are executable by the processor to enable addition of a previously non-compliant personal protection equipment item to a team personal protection equipment list of compliant personal protection equipment items based on the feedback.

11. Computer readable storage medium according to any of claims 6 to 10, wherein the computer executable instructions are executable by the processor to convert speech to text to obtain the user-specified compliance indication.

12. System for building personal protection equipment (PPE) rules, the system comprising:
a camera, a display, and a computing device, the computing device including a memory and a processor, wherein the processor is in communication with the camera, the display, and the memory, wherein the memory comprises instructions that, when executed by the processor:
receive a live image from the camera, wherein the live image is of a human body or a portion of the human body;
identify, by a machine learning model, any body parts in the image for which **PPE** is usable;
generate an augmented reality image for the display, the augmented reality image comprising the live image and an identifier object superimposed on any identified body parts;
identify a user-selected body part based on receipt of a selection of the user-selected body part in the augmented reality image;
find a set of PPE items that are usable for the user-selected body part from a database; and
add a PPE item selected from the set of PPE to a team PPE list.

13. System according to claim 12, wherein the memory comprises instructions that, when executed by the processor, create new PPE based on the live image and/or the augmented reality image, and/or wherein the memory comprises instructions that, when executed by the processor, convert audio, by a speech-to-text machine learning model, to a requested set of PPE items, confirm the requested set of PPE items are found in the PPE items stored in the database, and add the requested set of PPE items to the team PPE list.

14. System according to claim 13, wherein the memory comprises instructions that, when executed by the processor, convert the requested set of PPE items, by a text-to-speech machine learning model, to audio, and/or wherein the memory comprises instructions that, when executed by the processor, convert a confirmation message, by the speech-to-text machine learning model, to a confirmation indication, and add the add the requested set of PPE items to the team PPE list in response to the confirmation indication indicating the requested set of PPE items are to be added.

15. System according to any of claims 12 to 14, wherein the memory comprises instructions that, when executed by the processor, initialize the set of PPE items to default PPE items for a type of team.
